# EUROPEAN PATENT APPLICATION

(11) **EP 2 557 482 A2**
(43) Date of publication of application: **13.02.2013**
(21) Application number: 12177461.6
(22) Date of filing: 23.07.2012
(51) Int. Cl.: G06F 3/01, A63F 13/02, A63F 13/06, G06F 1/16, G06F 3/03

(54) **Input device, system and method**

(30) Priority: 11.08.2011 GB 201113794
(71) Applicant: Sony Computer Entertainment Europe Ltd., London W1F 7LP (GB)
(72) Inventor: Raghoebardajal, Sharwin Winesh, London, W1F 7LP (GB); Lintott, Mark, London, W1F 7LP (GB)
(74) Representative: Ealey, Douglas Ralph

(57) **Abstract**

An input device for an entertainment device comprises a first main surface, one or more side edges, one or more motion sensors operable to generate motion data, and a wireless communicator for transmitting the motion data to the entertainment device, wherein an elongate illuminated region extends along some or all of one or more of the side edges; in addition the input device may comprise a first stereoscopic camera and a second stereoscopic camera having respective viewpoints located at opposing corners of a first area of the main surface, the field of view of each stereoscopic camera encompassing a first volume of space immediately above the first area, wherein the first and second stereoscopic cameras are operable to generate respective stereoscopic images, from which a first depth map and complementary second depth map may be generated for opposite sides of an object placed within the first volume of space.

## Description

The present invention relates to an input device, system and method.

Conventional console systems or entertainment devices such as the PlayStation ® 3 (PS3®) are equipped with one or more peripheral input devices for inputting user commands to the entertainment device. One such input device is the SIXAXIS ® controller, which comprises several analog joysticks and buttons and a set of motion sensors (e.g. accelerometers and gyroscopes) to detect translation and rotation of the device in six axes (x, y, z, roll, pitch, yaw). Another such input device is the PlayStation Move ® controller, which also contains buttons and motion sensors, and further comprises an internally illuminated ball that enables the Move to be tracked by the PS3 using a video camera, commonly referred to as an EyeToy ®. In each case the input device communicates its status to the PS3 via Bluetooth ® or a similar wireless protocol, and in addition the EyeToy communicates with the PS3 via a universal serial bus link.

Therefore, in addition to the conventional joystick and button inputs, the SIXAXIS controller provides the PS3 with data about its relative orientation in six axes. This can be used as an input for games, for example to change the relative position of a game character or virtual camera. Meanwhile, the Move controller also provides the PS3 with data about its relative orientation in six axes, and this can further be correlated with its absolute position within an image captured by the EyeToy. This position and orientation can be used to specify a vector within the co-ordinates of the game space and hence to point at and/or move objects within the game space directly.

Whilst this is useful for many types of game, such as shooting games and dance games, there will nevertheless be games or other applications for an entertainment device where an alternative input device may be more suitable.

The present invention seeks to address or mitigate this problem.

In a first aspect, there is provided an input device according to claim 1.
In another aspect, there is provided an entertainment device according to claim 5.
In another aspect, there is provided an entertainment system according to claim 9.

In another aspect, there is provided an input method for an input device according to claim 12. In another aspect, there is provided an input method for an entertainment device according to claim 13
In another aspect, there is provided an input method for a system according to claim 14.

Further respective aspects and features of the invention are defined in the appended claims.

Embodiments of the present invention will now be described by way of example with reference to the accompanying drawings, in which:
- Figure 1 is a schematic diagram of an entertainment device;
- Figure 2 is a schematic diagram of an input device according to an embodiment of the present invention;
- Figures 3A and 3B are schematic diagrams of an input device and camera fields of view according to an embodiment of the present invention;
- Figure 4 is a schematic diagram of an input device according to an embodiment of the present invention;
- Figure 5 is a schematic diagram of an input device according to an embodiment of the present invention; and
- Figure 6 is a flow chart showing methods of operation of an input device, an entertainment device, and a system comprising both.

An input device, system and method are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

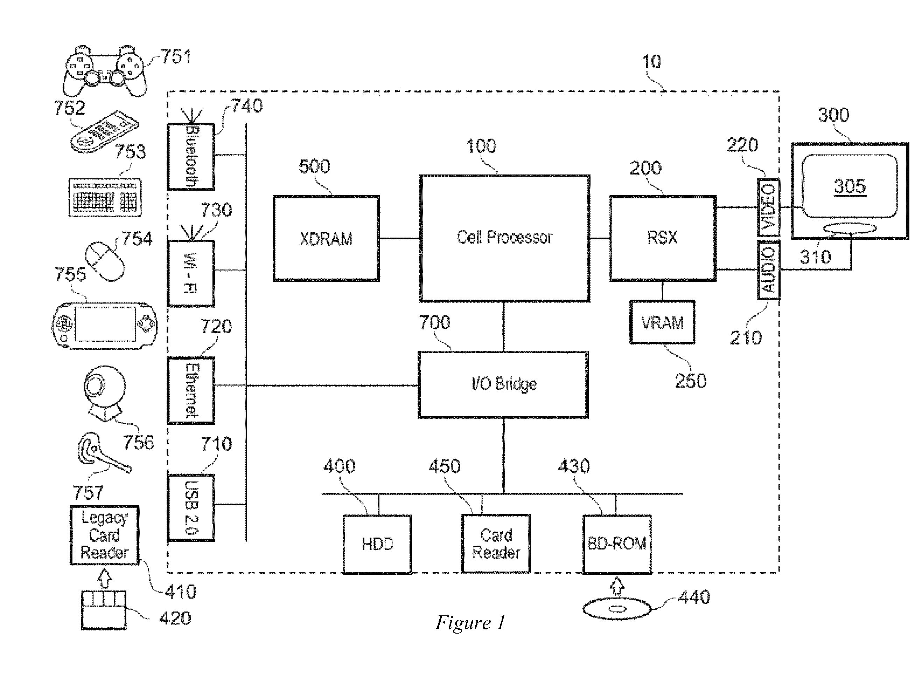

As noted above, a suitable entertainment device for use in conjunction with an input device is the Sony Playstation 3 entertainment device. Figure 1 schematically illustrates the overall system architecture of the PS3. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 (e.g. a SIXAXIS or Move controller) via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera 756 such as the EyeToy® video camera noted previously; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In embodiments of the present invention, game controllers are operable to communicate wirelessly with the system unit 10 via the Bluetooth link. However, a game controller 751 can instead be connected to a USB port, thereby also providing power by which to charge the battery of the game controller 751. As noted previously in addition to conventional control buttons, SIXAXIS and Move game controllers are sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device (PSP®) or the Playstation Vita ®. In these cases, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the EyeToy video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using a game controller 751, remote control 752 or other suitable input device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

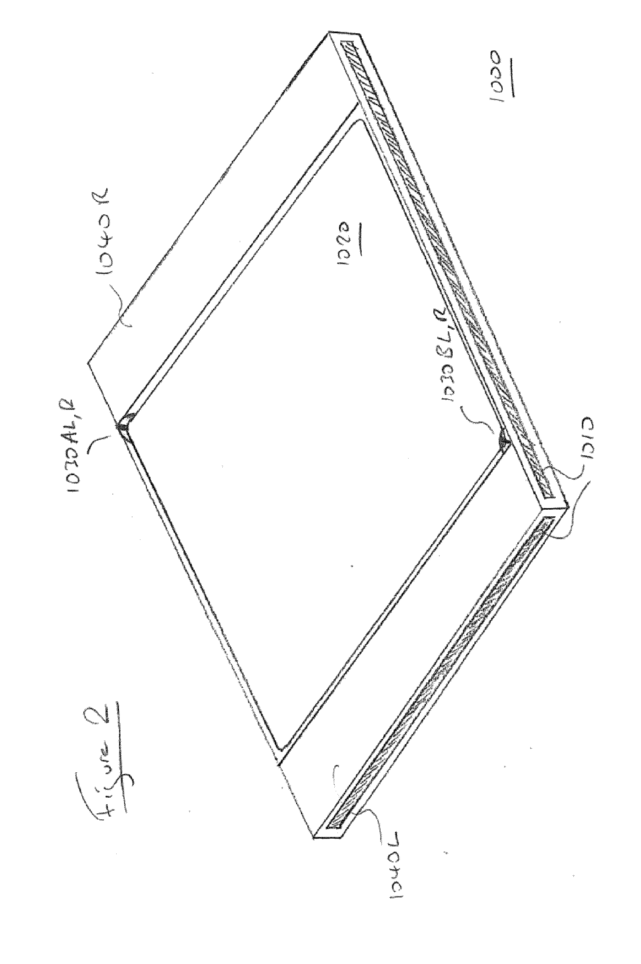

Referring now to Figure 2, an input device 1000, hereafter referred to as the EyePad, is typically a panel, tablet or slab-like device comprising one or more illuminated regions 1010, two stereoscopic video cameras 1030A(L,R) and 1030B(L,R), and optionally a touch sensitive surface 1020 (hereafter referred to as a touchpad).

The illuminated region(s) 1010 may take the form of an elongate light or series of lights. An elongate light may take the form of a bar or strip along some or all of a respective edge of the EyePad illuminated for example by one or more LEDs, or an incandescent bulb, or a cold cathode light; an elongate series of lights may take the form of a plurality of discrete points (e.g. LEDs) distributed along some or all of a respective edge of the EyePad. Such regions may be located on one or more edges of the EyePad. The edges of he EyePad are the comparatively narrow and elongate sides of the device.

The illuminated region(s) provide a similar functionality to that of the illuminated ball of the Playstation move, allowing the EyePad to be detected within an image captured by the EyeToy. The position of the illuminated region(s) within the captured image provides x, y co-ordinates for the EyePad, whilst the size of the illuminated region(s) within the captured image can be used to calculate a z co-ordinate for the Eyepad, based upon a reference size and distance relationship for images of the Eyepad captured by the EyeToy.

In addition, the angle(s) of the illuminated region(s) within the captured images can provide additional information about the orientation of the EyePad, and optionally can also be used to correct the size measurement and hence distance of the illuminated region(s) using well-known trigonometric rules.

In this way, information about the 3D position of the EyePad in the real world and some information about its orientation at that position can be detected by the PS3 based according to the appearance of the illuminated region(s) of the EyePad in the image captured by the EyeToy.

The stereoscopic video cameras 1030A(L,R) and 1030B(L,R) are located at opposite corners of the touchpad 1020 (or of an equivalent surface area where a touchpad is not provided). In Figure 2 the left and right cameras of each stereoscopic camera is shown sharing a single protective bezel.

In one embodiment of the present invention, the aspect ratio of the touchpad is 1:1 (i.e. square). In other embodiments, it may match the aspect ratio of a TV, such as 16:9. For simplicity of explanation and illustration, the description below assumes a square touchpad as a non-limiting example.

In an embodiment of the present invention, the left and right video cameras of each stereoscopic video camera are of a type typically found in mobile phones and other compact devices.

In an embodiment of the present invention, such cameras are positioned (with suitable lenses) a small distance apart (for example in the range 0.1 to 10 cm) substantially adjacent to two opposing corners of the touchpad. As noted above the cameras may share a protective bezel. In an alternative embodiment of the present invention, the cameras are located within the body of the EyePad (for example respectively in the side sections of the device 1040L and 1040R) and receive a view from the corners of the touchpad via a suitable prism arrangement or a fibre-optic arrangement, again optionally with shared or separate protective bezels. In this case, optionally only one camera is used in each corner, but receives a split view from two prisms or fibre-optic arrangements and hence captures a stereoscopic pair of images simultaneously as two halves of a single image.

In any of the above cases, the effective positions of the cameras' viewpoints remain at the aperture positions located at opposite corners of the touchpad.

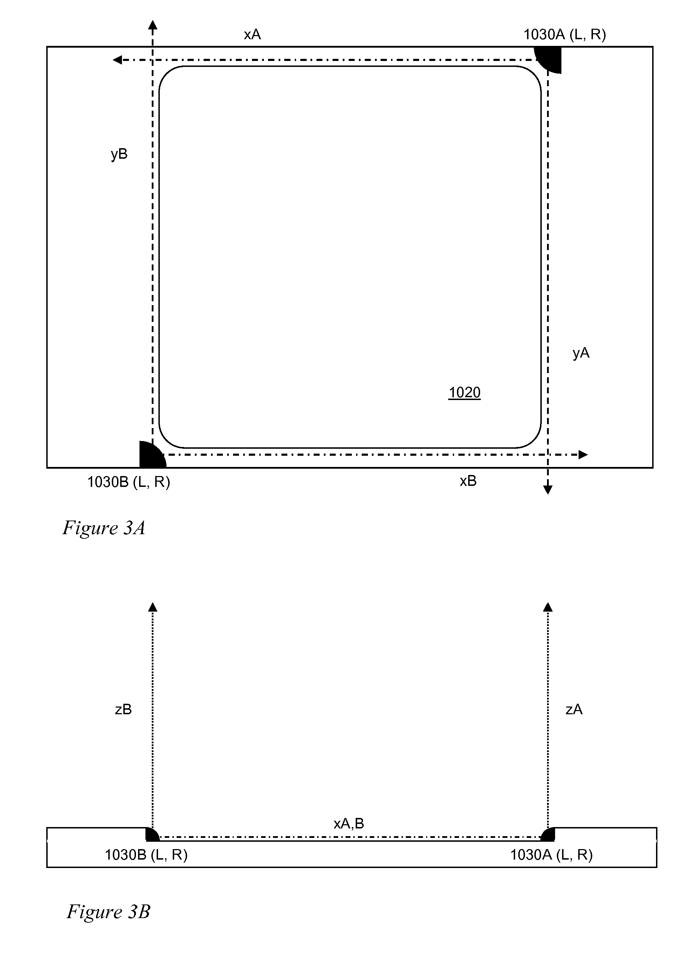

Figures 3A and 3B are plan and side views of the EyePad device respectively. In either of the above embodiments of the present invention, as shown in Figures 3A and 3B the field of view of each stereoscopic camera preferably encompasses the adjacent edges of the touch panel and also extends vertically (i.e. perpendicular to the touch panel). Consequently the field of view of the first camera 1030A encompasses a volume bounded by the axes xA, yA, zA, whilst the field of view of the second camera 1030B encompasses a volume bounded by the axes xB, yB, zB. These volumes intersect such that there is a common volume bounded by axes xA, yA, zA, xB, yB, zB. This volume has its base substantially coincident with the touchpad, and then extends upwards from the touchpad.

For a stereoscopic camera, it will be understood that the field of view is that which is common to the individual fields of view of the left and right cameras in the stereoscopic camera pair.

It will be appreciated that by default the cameras, and the lens, prism and/or fibre optic arrangement or a combination of these, may generate an image that encompasses more than the respective volumes described above. In this case, in an embodiment of the present invention, the cameras, and the lens, prism and/or fibre optic arrangement or a combination of these, may be modified in a known manner to optically adjust the field of view to substantially coincide with their respective volume. Alternatively or in addition, in an embodiment of the present invention, the region or regions of the captured image that will fall outside the respective volume can be pre-computed, and these areas of the image can optionally be disregarded for some or all of the further processing by the PS3 as described below.

The stereoscopic cameras can therefore provide stereo images for complementary sides of the common volume, from each of which so-called disparity maps or depth maps can be generated. A disparity or depth map describes the distance between corresponding points in the left and right stereo images, and the closeness of two corresponding points to the stereo camera is related to the size of the disparity between the two corresponding points in the images according to a known relationship. Points of correspondence may be found by cross-correlation between the left and right images, or by other suitable techniques known in the art.

Consequently if an object (such as a user's hand or an ornament) is placed within the common volume, complementary images and depth maps for both sides of the object can be obtained. Combining depth maps from two known positions on either side of an object provides a representative estimate of the 3D shape of the object, in an analogous fashion to two halves of a mould being combined to define the shape of a complete object.

In an embodiment of the present invention, the captured stereoscopic images are processed to generate two depth maps and two corresponding video images. In an embodiment of the present invention, the processing is performed by a processor 1100 on the EyePad, and the resulting depth maps and video images are transmitted to the PS3 via Bluetooth, optionally with any suitable form of compression. In an embodiment of the present invention, the processing is performed by the Cell processor on the PS3, based upon the stereoscopic video images from both stereo cameras as transmitted to the PS3 via Bluetooth, again optionally with any suitable form of compression.

In addition the EyePad can comprise similar motion sensors 1050 and Bluetooth or similar transmitters 1740 to those found within the SIXAXIS controller and the Move controller, as described previously. Hence in a similar manner to the Move controller, the position and orientation of the EyePad can be determined to a high degree of accuracy using a combination of cues from the captured image and also data regarding the relative translation and rotation detected by the EyePad and transmitted from the EyePad to the PS3.

Hence, based on the above features, using the PS3, the EyeToy and the EyePad it is possible for the PS3 to obtain data regarding:
- the absolute position of the EyePad with respect to an image captured by the EyeToy;
- the relative orientation of the EyePad in six axes from motion sensors;
- The status of any button or joystick controls on the EyePad;
- The location of one or more touch points on the EyePad touchpad; and
- The appearance and 3D shape of an object within the common volume occupying the space immediately above the touchpad.

Given this information, it is then also possible to calculate the position and orientation of the common volume as this has a fixed relationship to the EyeToy, and from this it is also possible to calculate the position and orientation of an object within the common volume.

In use, the EyePad can be treated firstly as an active augmented reality (AR) marker; the combination of the illuminated regions detected by the PS3 using the EyeToy and the telemetry from the EyePad itself provide accurate position and orientation information that is advantageously robust to common environmental problems that affect normal AR markers, such as adverse lighting conditions, partial occlusion or temporary complete occlusion, and small viewing angles.

The detection of the position of the EyePad using its own illumination, together with telemetry from the motion sensors within the EyePad, make the location and orientation of the surface of the Eyepad (e.g. the touch pad area) possible even in complete darkness.

Similarly, a spatially diverse illumination region, coupled with motion sensing, enables robust detection of the Eyepad in the captured EyeToy image; firstly, partial occlusion of the EyePad (for example by holding the edge facing the EyeToy camera) is unlikely to occlude all of the illuminated region(s), enabling normal operation to continue; secondly, given knowledge of the absolute position of the EyePad in a previous captured image at a time *t-n,* the current absolute position at time *t* can be calculated from the relative position data sent by the EyePad during the subsequent n frames. In this way temporary partial or total occlusion that prevents detection of the EyePad from images captured by the EyeToy can be compensated for. Similarly, the relative position data from the EyePad can be used to predict where the illuminated regions of the EyePad should be found in the captured image from the EyeToy, enabling more sensitive detection in these regions and potentially the option to not analyse regions of the captured image entirely, thereby saving processing resources. Likewise the relative orientation of the EyePad can be used to predict the effective size of the illuminated regions due to their relative angle to the EyeToy.

Likewise, because the illuminated region(s) are on the edge of the EyePad, the EyePad can be held horizontally at roughly the same height as the EyeToy camera and still be detected despite having a relative angle in the horizontal plane of zero degrees to the EyeToy camera.

As such the EyePad represents a more robust type of AR marker, capable of self illumination and the transmission of its own motion telemetry.

For example, the EyePad may be used as a grooming table for an EyePet ®; in the EyePet games, video captured by the EyeToy video camera is displayed on a television in conjunction with a virtual pet character; movements of the user and the use of AR markers enables the user to interact with the pet.

Hence for example, the user moves the EyePad downwards so that its absolute position in the captured EyeToy image is below a threshold level, prompting the EyePet to jump on to the EyePad, with the positioning of the EyePet being consistent with both the position and orientation of the EyePad. The user may then carry the EyePad and the superposed EyePet around their room, with the EyePet being scaled and rotated accordingly to appear to remain sat upon the EyePad.

In addition to this AR marker functionality, as noted above the stereoscopic views of the common volume located above the touch panel (or equivalent surface area) of the EyePad provide depth maps for any real object that is positioned within the common volume, such as the user's hand. From these depth maps and the known positions of the cameras on the EyePad, it is possible to construct a 3D model or estimate of the user's hand with respect to the location and orientation of the EyePad and hence also with respect to the location and orientation of the EyePet (or other virtual entities) the are interacting with the EyePad. The 3D model of the EyePet and the 3D model of the user's hand can thus occupy a common virtual space, enabling very precise interaction between them.

For example here a user points with their hand within the common volume, the depth maps from the two stereoscopic cameras describe the location of points on the surface of the user's index finger within the common volume, and hence it is possible to calculate whether those surface points coincide with the surface model of the virtual EyePet. This gives the user the precision to stroke the EyePet's ear, tap its nose, tickle its tummy or otherwise interact with it in very specific ways, and moreover to do so for whatever arbitrary position or orientation they are holding the EyePad in.

The common volume can also be used as a proxy for a 3D virtual environment. For example, the P3D can display a fish tank on the TV. The common volume on the EyePad can then correspond to the virtual volume of the fish tank, enabling the user to interact with a virtual fish in the tank by moving their finger to a corresponding position within the common volume. A similar mode of interaction could be used to explore a graphical rendering of a room in a point-and-click style adventure. Other examples will be apparent to a person skilled in the art, such as using a finger tip to specify a path for a rollercoaster, or playing a virtual version of the well known electrified wire-loop game.

In conjunction with the video images obtained by the stereoscopic cameras, EyePad (or the PS3 in conjunction with the EyePad) can also construct a vitual model of an object placed upon the touchpad or equivalent central area; for example if the user places a can of cola on the touchpad, depth maps and images for both sides of the can are obtained, enabling the generation of a virtual model of the can.

Optionally, to obtain an improved image of the can near the centreline of the diagonal of the touchpad running between the stereo cameras, the user may rotate the can, and the rotation is measured using known optical flow techniques; the resulting images and depth maps from the new angle provide redundancy that enables an improved image and model of the can to be generated. Alternatively or in addition, further stereoscopic cameras 1030C(L, R) and 1030D(L, R) may be provided at the remaining corners of the touchpad to provide such redundancy in the captured information.

In this way, the user can place an object on the EyePad, and see it copied into the virtual world of the game.

In a similar manner, the user can put their face within the common volume in order to import their own face onto an in-game character or other avatar. Where the common volume is smaller than the user's face, again an optical flow technique can be used to build multiple partial models of the user's face as it is passed through the common volume, and to assemble these partial models into a full model of the face. This technique can be used more generally to sample larger objects, relating the accumulated depth maps and images to each other using a combination of optical flow and the motion detection of the EyePad to create a final model of the object.

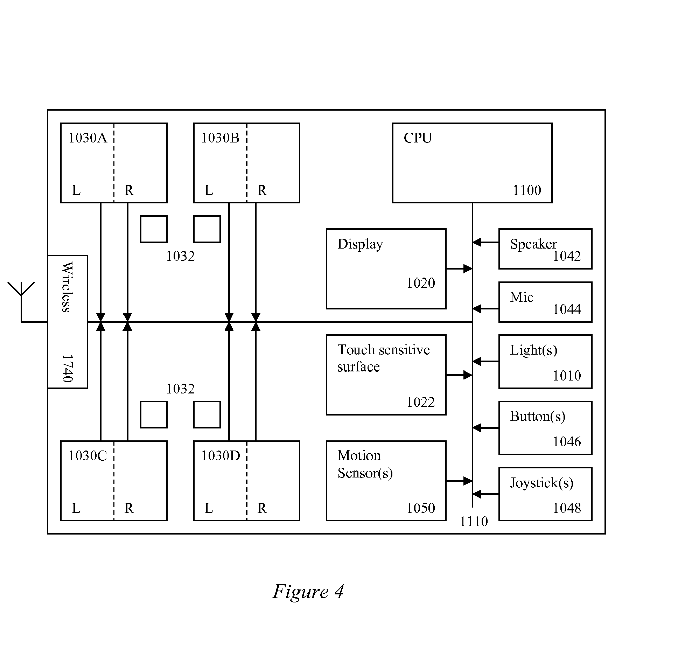

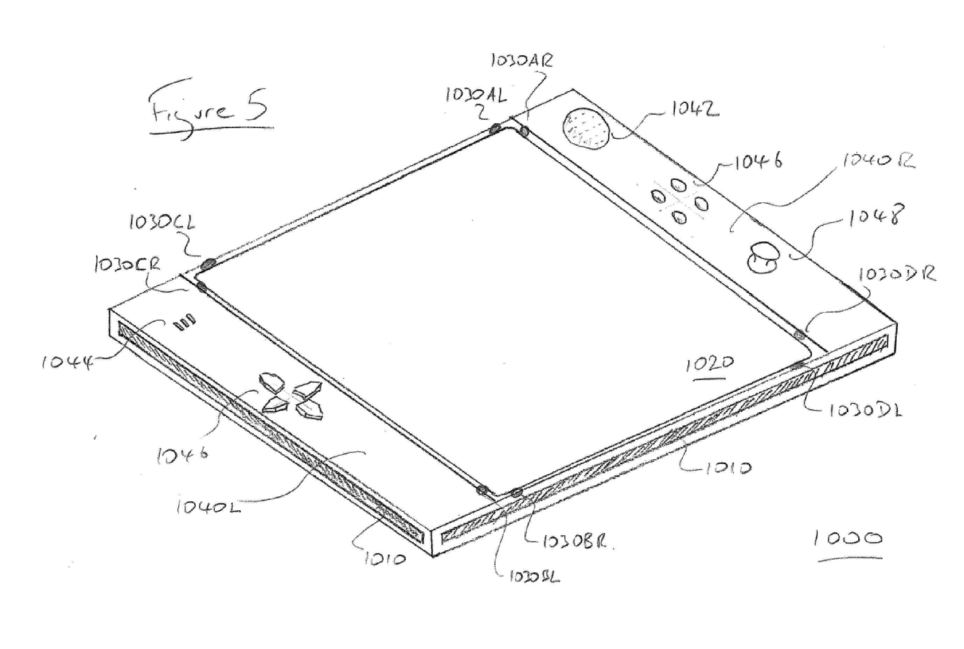

Referring now to Figures 4 and 5, as noted previously the EyePad comprises one or more illuminated regions or lights 1010, two stereoscopic video cameras 1030A(L,R) and 1030B(L,R), motion sensors 1050 and a wireless transmitter 1740. These are connected to a CPU 1100 via a bus 1110, though other suitable architectures are possible. In Figure 5 the left and right cameras of the respective stereoscopic cameras are shown with a wider separation to that illustrated in Figure 2.

The CPU may perform some or all of the image processing for the stereoscopic cameras. For example, the CPU may simply package the video data for transmission to the PS3 for further processing. Alternatively it may calculate the disparities between features of the left and right stereo images, and/or further calculate the consequent depth or distance of these features from the stereo cameras.

As noted previously, the EyePad may also comprise a touchpad 1020. This may be a conventional capacitance touchpad or panel. Such a touchpad typically comprises two layers of parallel conductive lines separated by an insulator and arranged at right angles to each other. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

The touchpad may therefore be used in a conventional manner, for example to control a reticule in a game by moving a finger over the surface, or to scroll though a webpage by making a downward sweeping gesture along the surface. Other touchpad gestures and modes of interaction will be apparent to the person skilled in the art.

In addition, it can be used to calibrate the depth maps generated from the stereoscopic images; if the user touches the touchpad with their finger, then the position of the user's finger as detected by the touchpad and as calculated from the depth maps should coincide to within a predetermined tolerance; this can be useful for example where harsh lighting conditions create strong shadows or other effects that can reduce the accuracy of the disparity measurements for the left and right stereo images.

For similar reasons light sources 1032 may optionally be provided substantially coincident with the stereo cameras (or simply at predetermined positions around the edge of the touch pad or central area), to provide more even illumination of objects within the common volume. This may also be of benefit if the cameras are set to a low exposure setting to reduce flooding of the stereo images by overhead lighting. The light sources may operate in the visible or near-infra-red spectrum, and optionally may also be treated as additional illumination regions for detection by the EyeToy.

The button(s) 1046 and/or Joystick(s) 1048 may conform to a greater or lesser extent an established format, such as the arrangement found on the SIXAXIS or move controllers. Where the EyePad copies the SIXAXIS control scheme, optionally the buttons corresponding to the shoulder buttons on the SIXAXIS controller may instead be placed on the facia 1040(L,R).

In addition, optionally a loudspeaker 1042 and/or a microphone 1044 may be provided. Audio for the loudspeaker may be streamed wirelessly from the PS3, or may be generated by the CPU or an audio/video processor (not shown). Similarly audio received by the microphone may be transmitted wirelessly to the PS3 (optionally after suitable compression), and may be used for example for a chat channel or for voice control of a game. Optionally the time difference between reception of a corresponding sound at the microphone 1044 and a microphone at the EyeToy may provide an additional distance measurement to calibrate distance estimates to the EyePad based on recognition of the illuminated areas. This may be beneficial in circumstances where the illuminated areas are partially occluded from the outset, making their correct length indeterminate.

Finally, optionally instead of a touchpad, the touch sensitive surface may be incorporated into a display to form a touch screen. The touch screen may provide additional gaming viewpoints, menu options and controls (e.g. a soft-key keyboard function) and may also provide additional images to assist with recognising and tracking the EyePad, such as displaying high-contrast fiduciary markers similar to so-called QR codes. The touch screen may also provide illumination for objects within the common area instead of or in addition to lights 1032. Alternatively, in an embodiment of the present invention, a touch sensitive surface is not provided and the display is not a touch screen.

Thus, based upon the above description, in a summary embodiment of the present invention an input device for an entertainment device comprises a first main surface (e.g. the upper surface of the device), one or more side edges (e.g. the sides forming the thickness of the device), one or more motion sensors operable to generate motion data (e.g. MEMS accelerometers and gyroscopes of the type found in the SIXAXIS and Move controllers), and a wireless communicator for transmitting the motion data to the entertainment device (e.g. a Wi-Fi or Bluetooth transmitter), and wherein an elongate illuminated region extends along some or all of one or more of the side edges (e.g. a longitudinal illuminated strip, effectively having only one dimension of length, and a much smaller width, for example in a ratio exceeding 5:1, or more preferably 10:1).

In this embodiment, the input device also comprises a first stereoscopic camera and a second stereoscopic camera having respective viewpoints located at opposing corners of a first area of the main surface, the field of view of each stereoscopic camera encompassing a first volume of space immediately above the first area (i.e. the common volume referred to previously), with the first and second stereoscopic cameras being operable to generate respective stereoscopic images, from which a first depth map and complementary second depth map may be generated for opposite sides of an object placed within the first volume of space.

Optionally, the input device itself comprises a processor operable to generate the first and second depth maps from the two respective stereoscopic images.

In addition, optionally the input device comprises one or more selected from a list consisting of:- third and fourth stereoscopic cameras having respective viewpoints located at remaining corners of the first area and fields of view also encompassing the first volume of space immediately above the first area; a touch sensitive surface located substantially coincident with the first area; a display located substantially coincident with the first area; and a light source substantially coincident with a respective stereoscopic camera.

Other optional features include one or more buttons and one or more joysticks, and one or more loudspeakers and microphones.

Similarly based upon the above description, in a summary embodiment of the present invention an entertainment device comprises a video receiver (e.g. a Wi-Fi, Bluetooth or USB input) operable to receive a captured video image frame from a video camera (e.g. an EyeToy), a wireless receiver (e.g. Wi-Fi or Bluetooth) operable to receive relative position, velocity and/or acceleration data, collectively referred to as motion data or movement telemetry, from an input device, an image analyser operable to detect one or more elongate illuminated regions extending along some or all of one or more side edges of an input device captured in the video image frame, and a processor (i.e. the Cell processor) operable to combine the position and orientation of the or each detected elongate illuminated region and the relative movement telemetry to estimate a three dimensional position and an orientation of the input device.

In this embodiment, the processor may operate to estimate the position and orientation of the first volume of space immediately above the first area of the input device, as it has a known spatial relationship to the input device itself, the position and orientation of which the processor has just estimated.

Optionally the processor may operate to estimate the position and orientation of a real object (such as a user's hand) within the first volume of space immediately above the first area of the input device (i.e. the common area referred to herein), the object being described by a virtual model formed from a complementary pair of depth maps defining the distance to surface points of the object from two known positions on the input device. The model may therefore take the form of a set of point co-ordinates, or these may be used to generate a set of polygons defining a surface model, and/or may be used to estimate a skeletal model of the object (e.g. a skeletal model of a hand).

The processor, rather than the input device, may operate to generate the complementary pair of depth maps from respective stereoscopic images received from the input device. Alternatively the process may be shared between the input device and the entertainment device, for example where the input device calculates displacements between stereo images, and transmits these displacements to the entertainment device, which generates the depth maps.

The input device and the entertainment device typically operate together as a system. When doing so, the processor of the entertainment device may operate to calculate from complementary depth maps the position and orientation of a virtual model corresponding spatially to a real object in the first volume of space immediately above the first area of the input device, and is operable to use some or all of the calculated position and orientation of the virtual model as a control input for an application. Thus as noted above for example, the depth maps generated from stereo images on opposite sides of an object can be used to characterise the distance of surface points on the object from the stereo cameras, and hence the objects shape and position within the common volume.

Similarly, in this summary embodiment, the processor of the entertainment device can operate to generate a video signal comprising some or all of the captured video image frame in conjunction with one or more virtual characters (e.g. an EyePet) to form an augmented reality image (e.g. one in which some or all of the captured video and the EyePet co-exist), and the processor of the entertainment device can also operate to position, scale and orient one or more of the virtual characters in a manner responsive to the three dimensional position and the orientation of the input device (for example to make the EyePet appear to sit on the input device).

Optionally, the processor of the entertainment device may then operate to calculate the position and orientation of a virtual character at least partly occupying the first volume of space immediately above the first area of the input device, and to consequently calculate the or each point of virtual contact between the virtual model of the real object and the virtual character. As noted above, the virtual model of the real object may constitute a set of spatial points, a polygonal model, a skeletal model or any other suitable description or abstraction of the real object for input purposes, and hence the calculation of a point of contact will take a form appropriate to the type of virtual model.

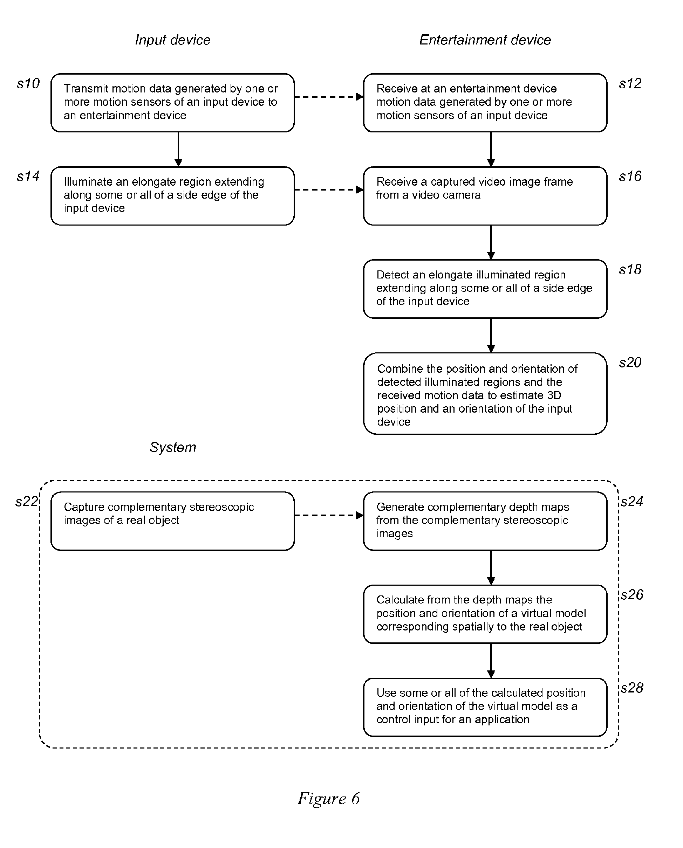

Referring now to Figure 6, an input method for an input device comprises:
- in a first step s10, transmitting motion data generated by one or more motion sensors of an input device to an entertainment device; and
- in a second step s14, illuminating one or more elongate regions extending along one or more side edges of the input device for detection by a video camera operably coupled to the entertainment device.

Meanwhile, an input method for an entertainment device comprises:
- in a first step s12, receiving at an entertainment device motion data generated by one or more motion sensors of an input device;
- in a second step s16, receiving a captured video image frame from a video camera;
- in a third step s18, detecting one or more elongate illuminated regions extending along some or all of one or more side edges of the input device captured in the video image frame, and
- in a fourth step s20 combining the position and orientation of the or each detected elongate illuminated region and the received motion data to estimate a three dimensional position and an orientation of the input device.

Meanwhile, an input method for a system comprising an input device and an entertainment device comprises:
- in a first step s22, capturing complementary stereoscopic images of a real object located within a first volume of space located immediately above a first area of a main surface of the input device;
- in a second step s24, generating complementary depth maps from the complementary stereoscopic images;
- in a third step s26, calculating from the complementary depth maps the position and orientation of a virtual model corresponding spatially to the real object; and
- in a fourth step s28, using some or all of the calculated position and orientation of the virtual model as a control input for an application.

It will be apparent to a person skilled in the art that variations in the above methods corresponding to operation of the various embodiments of the apparatus as described and claimed herein are considered within the scope of the present invention, including but not limited to:
- providing the input device with a first stereoscopic camera and a second stereoscopic camera having respective viewpoints located at opposing corners of a first area of the main surface, the field of view of each stereoscopic camera encompassing a first volume of space immediately above the first area;
- these cameras generating respective stereoscopic images, from which a first depth map and complementary second depth map may be generated for opposite sides of an object placed within the first volume of space;
- the input device or the entertainment device generating the first and second depth maps from the two respective stereoscopic images;
- providing the input device with one or more one or more selected from the list consisting of third and fourth stereoscopic cameras having respective viewpoints located at remaining corners of the first area and fields of view encompassing the first volume of space immediately above the first area, a touch sensitive surface located substantially coincident with the first area, a display located substantially coincident with the first area, and a light source substantially coincident with a respective stereoscopic camera;
- the entertainment device estimating the position and orientation of the first volume of space immediately above the first area of the input device;
- the entertainment device estimating the position and orientation of a real object within the first volume of space immediately above the first area of the input device, the object being described by a virtual model formed from a complementary pair of depth maps defining the distance to surface points of the object from two known positions on the input device;
- the entertainment device of a system calculating from complementary depth maps the position and orientation of a virtual model corresponding spatially to a real object in the first volume of space immediately above the first area of the input device, and is operable to use some or all of the calculated position and orientation of the virtual model as a control input for an application;
- the entertainment device of a system generating a video signal comprising some or all of the captured video image frame in conjunction with one or more virtual characters to form an augmented reality image, and positioning, scaling and orienting one or more of the virtual characters in a manner responsive to the three dimensional position and the orientation of the input device; and
- calculating the position and orientation of a virtual character at least partly occupying the first volume of space immediately above the first area of the input device, and to consequently calculate the or each point of virtual contact between the virtual model of the real object and the virtual character.

Finally, it will be appreciated that the methods disclosed herein may be carried out on conventional hardware suitably adapted as applicable by software instruction or by the inclusion or substitution of dedicated hardware. Respective methods may be wholly or partially implemented on an input device, or wholly or partially implemented on an entertainment device, as described herein.

Thus the required adaptation to existing parts of a conventional equivalent device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

## Claims

1. An input device for an entertainment device, the input device comprising:
a first main surface;
one or more side edges;
one or more motion sensors operable to generate motion data; and
a wireless communicator for transmitting the motion data to the entertainment device,
and wherein
an elongate illuminated region extends along some or all of one or more of the side edges.

2. An input device according to claim 1 comprising:
a first stereoscopic camera and a second stereoscopic camera having respective viewpoints located at opposing corners of a first area of the main surface, the field of view of each stereoscopic camera encompassing a first volume of space immediately above the first area;
and wherein
the first and second stereoscopic cameras are operable to generate respective stereoscopic images, from which a first depth map and complementary second depth map may be generated for opposite sides of an object placed within the first volume of space.

3. An input device according to claim 2, comprising a processor operable to generate the first and second depth maps from the two respective stereoscopic images.

4. An input device according to any one of the preceding claims, comprising one or more selected from the list consisting of:
third and fourth stereoscopic cameras having respective viewpoints located at remaining corners of the first area and fields of view encompassing the first volume of space immediately above the first area;
a touch sensitive surface located substantially coincident with the first area;
a display located substantially coincident with the first area; and
a light source substantially coincident with a respective stereoscopic camera.

5. An entertainment device, comprising
a video receiver operable to receive a captured video image frame from a video camera;
a wireless receiver operable to receive relative movement telemetry from an input device;
an image analyser operable to detect one or more elongate illuminated regions extending along some or all of one or more side edges of an input device captured in the video image frame; and
a processor operable to combine the position and orientation of the or each detected elongate illuminated region and the relative movement telemetry to estimate a three dimensional position and an orientation of the input device.

6. An entertainment device according to claim 5, in which
the processor is operable to estimate the position and orientation of the first volume of space immediately above the first area of the input device.

7. An entertainment device according to claim 5 or claim 6, in which the processor is operable to estimate the position and orientation of a real object within the first volume of space immediately above the first area of the input device, the object being described by a virtual model formed from a complementary pair of depth maps defining the distance to surface points of the object from two known positions on the input device.

8. An entertainment device according to claim 7, in which the processor is operable to generate the complementary pair of depth maps from respective stereoscopic images received from the input device.

9. An entertainment system comprising:
an input device according to any one of claims 2 to 5; and
an entertainment device according to any one of claims 6 to 9,
and in which
the processor of the entertainment device is operable to calculate from complementary depth maps the position and orientation of a virtual model corresponding spatially to a real object in the first volume of space immediately above the first area of the input device, and is operable to use some or all of the calculated position and orientation of the virtual model as a control input for an application.

10. An entertainment system according to claim 9, in which
the processor of the entertainment device is operable to generate a video signal comprising some or all of the captured video image frame in conjunction with one or more virtual characters to form an augmented reality image; and
the processor of the entertainment device is operable to position, scale and orient one or more of the virtual characters in a manner responsive to the three dimensional position and the orientation of the input device.

11. An entertainment system according to claim 10, in which:
the processor of the entertainment device is operable to calculate the position and orientation of a virtual character at least partly occupying the first volume of space immediately above the first area of the input device, and to consequently calculate the or each point of virtual contact between the virtual model of the real object and the virtual character.

12. An input method for an input device, comprising the steps of:
transmitting motion data generated by one or more motion sensors of an input device to an entertainment device;
illuminating one or more elongate regions extending along one or more side edges of the input device for detection by a video camera operably coupled to the entertainment device.

13. An input method for an entertainment device, comprising the steps of:
receiving at an entertainment device motion data generated by one or more motion sensors of an input device;
receiving a captured video image frame from a video camera
detecting one or more elongate illuminated regions extending along some or all of one or more side edges of the input device captured in the video image frame; and
combining the position and orientation of the or each detected elongate illuminated region and the received motion data to estimate a three dimensional position and an orientation of the input device.

14. An input method for a system comprising an input device and an entertainment device, comprising the steps of:
capturing complementary stereoscopic images of a real object from opposing corners of a first area of a main surface of the input device, the real object located within a first volume of space located immediately above the first area of the main surface of the input device;
generating complementary depth maps of opposite sides of the real object from the complementary stereoscopic images;
calculating from the complementary depth maps the position and orientation of a virtual model corresponding spatially to the real object; and
using some or all of the calculated position and orientation of the virtual model as a control input for an application.

15. A computer program for implementing the steps of any preceding method claim.
